# EUROPÄISCHE PATENTANMELDUNG

(11) **EP 1 808 631 A2**
(43) Veröffentlichungstag der Anmeldung: **18.07.2007**
(21) Anmeldenummer: 06019517.9
(22) Anmeldetag: 19.09.2006
(51) Int. Cl.: F16L 3/123, F16L 3/137, F16L 33/04

(54) **Schelle mit einem biegsamen Halteband**

(30) Priorität: 10.12.2005 DE 102005059118
(71) Anmelder: HYDAC Accessories GmbH, 66280 Sulzbach/Saar (DE)
(72) Erfinder: Kasubke, Volker, 66540 Neunkirchen (DE)
(74) Vertreter: Bartels & Partner

(57) **Zusammenfassung**

Bei einer Schelle mit einem biegsamen Halteband (1), das einen Aufnahmeraum (3) begrenzt und an seinem freien Ende eine eine Zugkraft im Halteband (1) erzeugende Verschlusseinrichtung (9) aufweist, und mit einem Schellen-Halteteil (17), das eine Anlagefläche (27) für ein im Aufnahmeraum (3) gehaltenes Aufnahmeteil und eine vom Halteband (1) umgebene Haltefläche (29) für die Lagefixierung des Haltebandes (1) aufweist, ist zwischen der Haltefläche (29) des Halteteiles (17) und dem Halteband (1) ein Kompensationsteil (31) vorgesehen, das das Halteband (1) zumindest bereichsweise von der Haltefläche (29) in einem Abstand hält, dessen Größe in Abhängigkeit von der Höhe der Zugkraft im Halteband (1) veränderlich ist.

## Beschreibung

Die Erfindung bezieht sich auf eine Schelle mit einem biegsamen Halteband, das einen Aufnahmeraum begrenzt und an seinem freien Ende eine eine Zugkraft im Halteband erzeugende Verschlusseinrichtung aufweist, und mit einem Schellen-Halteteil, das eine Anlagefläche für ein im Aufnahmeraum gehaltenes Aufnahmeteil und eine vom Halteband umgebene Haltefläche für die Lagefixierung des Haltebandes aufweist.

Schellen dieser Art, auch als "Gelenkband-Konsolenschelle" bezeichnet, sind bekannt, siehe DE 195 18 309 C1. Derartige Schellen werden vorzugsweise für die Befestigung von verhältnismäßig großvolumigen Aufnahmeteilen, wie Druckbehälter für Fluide oder Gasflaschen, eingesetzt. Änderungen des Innendruckes, wie sie sich im Betrieb bei derartigen Aufnahmeteilen in den meisten Fällen ergeben, führen in gewissem Ausmaß zu Volumenänderungen und damit zu Änderungen des Außenumfanges des durch das Halteband fixierten Aufnahmeteiles, was wiederum Änderungen der im Halteband herrschenden Zugkraft hervorruft. Somit besteht die Gefahr, dass bei zu starker Verringerung der Zugkraft die Lagefixierung des Aufnahmeteiles ungenügend ist, oder dass, im umgekehrten Fall, durch Umfangsvergrößerung eine übermäßige Zugkraft im Halteband und somit eine Überbeanspruchung erzeugt wird.

Im Hinblick hierauf stellt sich die Erfindung die Aufgabe, eine Schelle der betrachteten Art zur Verfügung zu stellen, bei der Änderungen der Umfangsgröße des durch das Halteband eingespannten Aufnahmeteiles möglichst geringe Änderungen der im Halteband herrschenden Zugkraft verursachen.

Bei einer Schelle der eingangs genannten Art ist diese Aufgabe gemäß dem kennzeichnenden Teil des Patentanspruches 1 dadurch gelöst, dass zwischen der Haltefläche des Halteteiles und dem Halteband ein Kompensationsteil vorgesehen ist, das das Halteband zumindest bereichsweise von der Haltefläche in einem Abstand hält, dessen Größe in Abhängigkeit von der Höhe der Zugkraft im Halteband veränderlich ist.

Dadurch, dass demgemäß keine starre Lagefixierung des Haltebandes durch unmittelbare Anlage an der Haltefläche des Halteteiles vorgesehen ist, sondern das Halteband in einem zugkraftabhängigen Abstand von der Haltefläche und damit von der Anlagefläche des Halteteiles gehalten ist, ergibt sich eine zugkraftabhängige Änderung der wirksamen Spannlänge, mit der das Halteband am Aufnahmeteil anliegt. Damit ergeben sich bei Umfangsänderungen des Aufnahmeteiles lediglich geringe Veränderungen der Zugkraft im Halteband.

Als Kompensationsteil kann in vorteilhafter Weise ein bandartiges Federelement vorgesehen sein, das sich zumindest entlang eines Großteiles der Länge der Haltefläche erstreckt. Die so bewirkte Lageveränderung des Haltebandes relativ zum Halteteil, wobei sich diese Lageänderung über einen Großteil der Länge der Haltefläche erstreckt, führt selbst bei verhältnismäßig geringem, durch das Federelement zur Verfügung gestellten Federweg zu einer merklichen Veränderung der wirksamen, spannenden Länge des Haltebandes, so dass ein verhältnismäßig großer Kompensationsbereich erreicht wird.

Bei vorteilhaften Ausführungsbeispielen ist das bandartige Federelement ein sich zumindest entlang der Gesamtlänge der Haltefläche erstreckendes Federband in Form eines Wellenbandes, das in Bandlängsrichtung so gewellt ist, dass im Wechsel Wellenberge und Wellentäler gebildet werden. Ein derartiges, aus einem Federstahl geformtes Wellenband stellt eine verhältnismäßig hohe Federkonstante zur Verfügung, wie sie für hohe Zugkräfte von Haltebändern günstig ist.

Das Federband kann mit den Wellenbergen an der Haltefläche und mit der Rückseite der Wellentäler am Halteband anliegen, wobei am Grund der Wellentäler noppenartige Abstützkörper, die beispielsweise runde Kuppen bilden, gegen die Haltefläche hin vorspringend ausgebildet sein können, um Abstützkörper für die Begrenzung des vom Federband zur Verfügung gestellten Federweges zu bilden. Durch Anlage dieser Abstützkörper an der Haltefläche des Halteteiles wird eine Überlastung des Federbandes bei zu großen Zugkräften des Haltebandes verhindert.

Das Federband kann, vorzugsweise an einem im mittleren Längenbereich gelegenen Wellenberg, an der Haltefläche fixiert sein.

In ähnlicher Weise wie bei den üblichen Gelenkband-Konsolenschellen kann das Halteteil aus einem langgestreckten, plattenartigen Element gebildet sein, dessen mittlerer Längenabschnitt derart kreisbogenartig gewölbt ist, dass er mit der vom Aufnahmeraum der Schelle abgekehrten Seite die Haltefläche für die Anlage des Federbandes und mit der dem Aufnahmeraum zugekehrten Seite die Anlagefläche für das Aufnahmeteil bildet.

Bei so gestaltetem Halteteil kann im plattenartigen Element an den entsprechenden Durchtrittsstellen jeweils ein Durchbruch für den Durchtritt des Haltebandes vorgesehen sein, das sich in einem vom Federband definierten Abstand von der Haltefläche entlang des kreisbogenartig gewölbten Längenabschnittes erstreckt.

Dabei kann die Anordnung so getroffen sein, dass die Länge des Federbandes derart gewählt ist, dass seine beiden Enden sich um eine gewisse Strekke durch die Durchbrüche hindurch erstrecken.

Vorzugsweise sind diese die Durchbrüche durchgreifenden Enden des Federbandes glatte Enden, d. h. frei von Wellungen, so dass sich diese Enden und das aus den Durchbrüchen austretende Halteband jeweils flach aneinander anschmiegen können.

Nachstehend ist die Erfindung anhand der Zeichnung im Einzelnen erläutert. Es zeigen:
- Fig. 1 eine Seitenansicht eines Ausführungsbeispieles der Schelle mit Halteband und Halteteil;
- Fig. 2 eine Draufsicht des Halteteiles der Schelle von Fig. 1;
- Fig. 3 eine gegenüber Fig. 1 und 2 in größerem Maßstab gezeichnete, perspektivische Schrägansicht nur des Halteteiles und des Federbandes des Ausführungsbeispieles und
- Fig. 4 eine vergrößerte Teildarstellung des in Fig. 1 mit IV bezeichneten Bezirks.

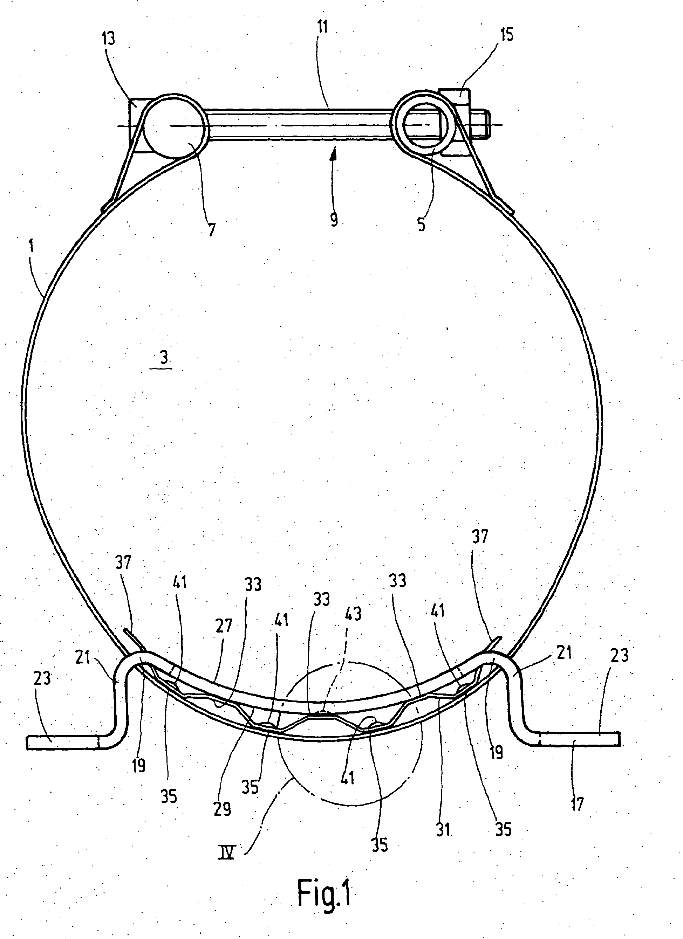

Die Schelle nach der Fig. 1 weist als Spannband ein biegsames Halteband 1 auf, das im wesentlichen kreisförmig ausgebildet ist und einen Aufnahmeraum 3 begrenzt, in dem ein Aufnahmeteil in Form eines rohrförmigen Körpers (nicht dargestellt) in seiner Lage festlegbar ist. Das Halteband 1 ist an seinen freien Enden umgebogen und umschließt jeweils einen bolzenartigen Zapfen 5 und 7, die Bestandteil eines als Ganzes mit 9 bezeichneten Verschlussteiles sind. Dieses ist mit einem verschwenkbaren Schraubenbolzen 11 versehen, der an seinem freien Ende ein Gewinde und an seinem anderen Ende einen Schraubenkopf 13 aufweist, der mit einer Innen-Sechskantausnehmung versehen ist.

Auf das Gewinde des Schraubenbolzens 11 ist eine Gewindemutter 15 aufschraubbar, die eine Längsverstellung des Schraubenbolzens 11 ermöglicht. Im Bereich der beiden Zapfen 5 und 7 ist das Halteband 1 längs geteilt, und der Zapfen 7 weist eine ovale, nach oben hin offene Ausnehmung (nicht dargestellt) auf, die zum Herstellen des Schnellverschlusses den Eingriff des Schraubenbolzens 11 von oben her erlaubt. Der andere Zapfen 5, der eine Durchgangsbohrung für den Durchtritt des Schraubenbolzens 11 aufweist, ist innerhalb des umgebogenen Haltebandes 1 drehbar gehalten, um die zum Ein- und Ausschwenken des Schraubenbolzens 11 erforderliche Beweglichkeit zur Verfügung zu stellen.

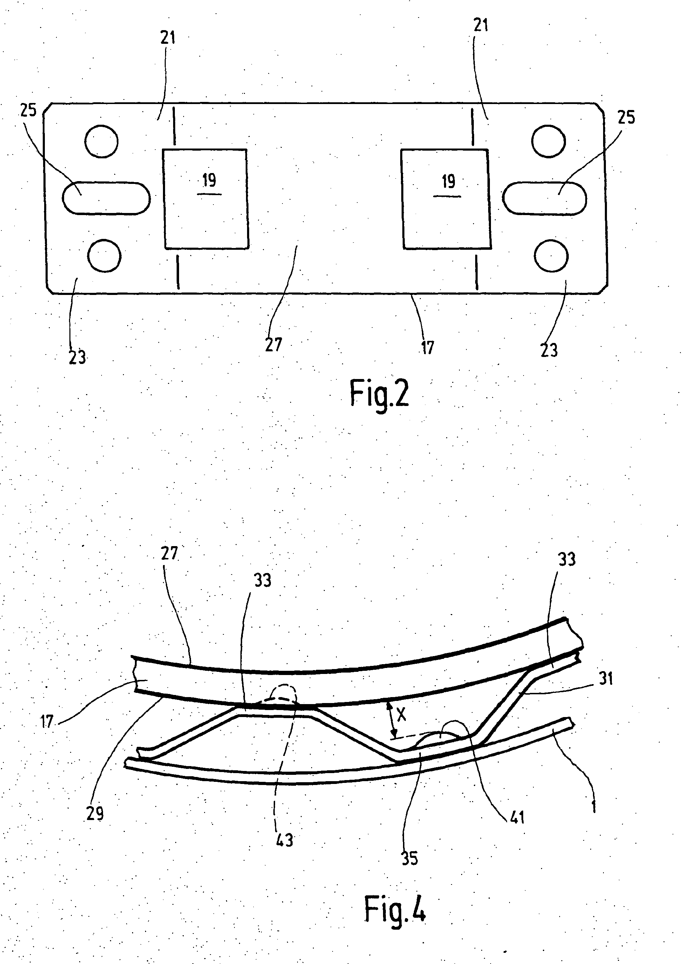

Die Schelle weist darüber hinaus ein Halteteil 17 auf, das für den Durchtritt des Haltebandes 1 mit zwei Durchbrüchen 19 versehen ist, die jeweils im Bereich einer Umlenkstelle 21 angeordnet sind, an der das Halteteil 17 endseitig so umgebogen ist, dass es in jeweils ein Fußteil 23 übergeht, die zum Festlegen des Halteteiles 17 auf einem festen Untergrund mit Längsbohrungen 25 oder dergleichen versehen sein können (Fig. 2).

Wie aus Fig. 1 deutlich zu ersehen ist, ist das Halteteil 17 in dem zwischen den Umlenkstellen 21 gelegenen, mittleren Längenabschnitt derart kreisbogenartig gewölbt, dass es mit der im Aufnahmeraum 3 der Schelle zugekehrten Seite eine gewölbte Anlagefläche 27 für das nicht gezeigte Aufnahmeteil bildet und dass es mit der vom Aufnahmeraum 3 der Schelle abgekehrten Seite eine Haltefläche 29 bildet, auf der das Halteband 1 abgestützt ist, wobei diese Abstützung über ein zwischen Haltefläche 29 und Halteband 1 eingelegtes, als Federband ausgebildetes Kompensationsteil 31 erfolgt.
Wie aus den Fig. 1, 3 und 4 ersichtlich, handelt es sich bei dem Federband um ein wellenartig geformtes Band aus Federstahl, in dessen Längsrichtung sich Wellenberge 33 mit Wellentälern 35 abwechseln und äußere Enden 37 des Federbandes wellenfrei sind. Wie aus Fig. 1 und 4 ebenfalls ersichtlich, liegt das Federband mit den Wellenbergen 33 an der Haltefläche 29 an, und das Halteband 1 umgibt die Rückseite der Wellentäler 35.

Um den in Fig. 4 mit x bezeichneten Hub des vom Federband zur Verfügung gestellten Federweges zu begrenzen, um den sich der Abstand zwischen Halteband 1 und Haltefläche 29 bei Zunahme der Zugkraft im Halteband 1 verringern kann, befinden sich am Grund der Wellentäler 35 als Abstützkörper 41 noppenartige, rundkuppenartige Auswölbungen, die gegen die Haltefläche 29 hin vorspringen.

Um das Federband gegen eine Längsverschiebung an der Haltefläche 29 zu sichern, kann, wie aus Fig. 1 und insbesondere aus Fig. 4 ersichtlich, an einem im mittleren Längenbereich gelegenen Wellenberg eine Fixierung zwischen Federband und Haltefläche 29 vorgesehen sein, beispielsweise in Form eines Schweißpunktes oder einer den Auswölbungen 41 ähnlichen Auswölbung 43, die in eine Vertiefung in der Haltefläche 29 eingreift.

Wie erwähnt, führen Änderungen der Zugkraft im Halteband 1 zu einem mehr oder weniger starken Flachdrücken des Federbandes, so dass das Halteband 1 innerhalb der Grenzen des Hubes x des vom Federband zur Verfügung gestellten Federweges in mehr oder weniger großem Abstand von der Haltefläche 29 verläuft. Dadurch ergibt sich eine gleichmäßigere Zugkraft im Halteband bei gegebenenfalls auftretenden Änderungen des vom Halteband 1 umschlungenen Aufnahmeteiles.

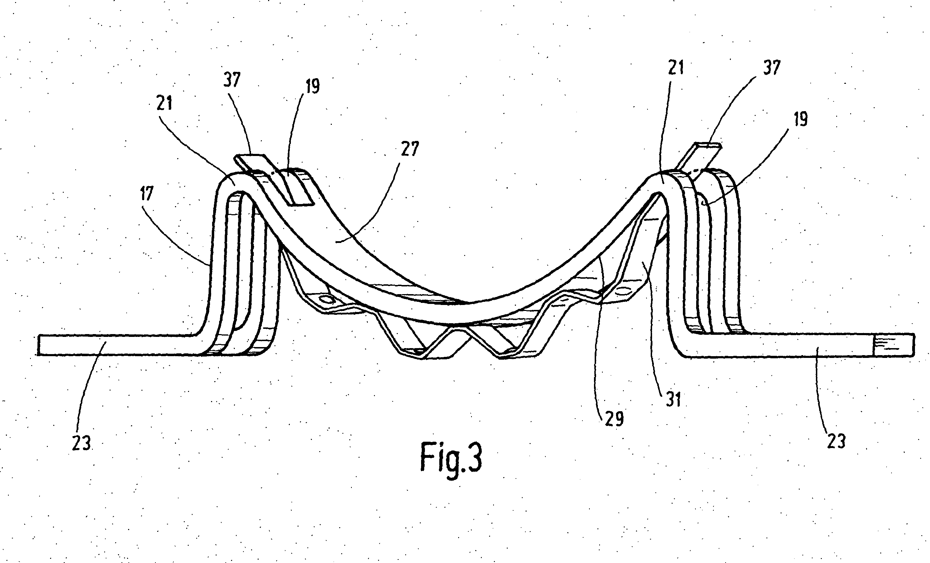

Wie aus Fig. 1 und 3 zu ersehen, ist die Länge des Federbandes so gewählt, dass sich seine wellenfreien Enden 37 geringfügig über die Durchbrüche 19 des Halteteiles 17 hinaus erstrecken, wo sie sich einerseits an das Halteband 1 und an den Aussenumfang des gespannten Aufnahmeteiles (nicht gezeigt) anschmiegen können. Alternativ könnte die Länge des Federbandes so gewählt sein, dass kein Durchtritt der Enden 37 durch die Durchbrüche 19 erfolgt. Durch Dimensionierung, Formgebung und Anzahl der jeweils Verwendung findenden Federbänder können Federkonstante sowie Gesamtfederweg (Hub x), die jeweils zur Verfügung gestellt werden, an die Erfordernisse des jeweiligen Einsatzzweckes angepaßt werden.

## Patentansprüche

1. Schelle mit einem biegsamen Halteband (1), das einen Aufnahmeraum (3) begrenzt und an seinem freien Ende eine eine Zugkraft im Halteband (1) erzeugende Verschlusseinrichtung (9) aufweist, und mit einem Schellen-Halteteil (17), das eine Anlagefläche (27) für ein im Aufnahmeraum (3) gehaltenes Aufnahmeteil und eine vom Halteband (1) umgebene Haltefläche (29) für die Lagefixierung des Haltebandes (1) aufweist, **dadurch gekennzeichnet, dass** zwischen der Haltefläche (29) des Halteteiles (17) und dem Halteband (1) ein Kompensationsteil (31) vorgesehen ist, das das Halteband (1) zumindest bereichsweise von der Haltefläche (29) in einem Abstand hält, dessen Größe in Abhängigkeit von der Höhe der Zugkraft im Halteband (1) veränderlich ist.

2. Schelle nach Anspruch 1, **dadurch gekennzeichnet, dass** als Kompensationsteil ein bandartiges Federelement vorgesehen ist, das sich zumindest entlang eines Großteiles der Länge der Haltefläche (29) erstreckt.

3. Schelle nach Anspruch 2, **dadurch gekennzeichnet, dass** das bandartige Federelement ein sich zumindest entlang der Gesamtlänge der Haltefläche (29) erstreckendes Federband ist, das in Bandlängsrichtung so gewellt ist, dass im Wechsel Wellenberge (33) und Wellentäler (35) gebildet werden.

4. Schelle nach Anspruch 3, **dadurch gekennzeichnet, dass** das Federband mit den Wellenbergen (33) an der Haltefläche (29) und mit der Rückseite der Wellentäler (35) am Halteband (1) anliegt und dass am Grund der Wellentäler (35) noppenartige, gegen die Haltefläche (29) vorspringende Abstützkörper (41) zur Begrenzung des vom Federband zur Verfügung gestellten Federweges (x) vorhanden sind.

5. Schelle nach Anspruch 3 oder 4, **dadurch gekennzeichnet, dass** das Federband, vorzugsweise an einem im mittleren Längenbereich gelegenen Wellenberg (33), an der Haltefläche (29) fixiert ist.

6. Schelle nach einem der Ansprüche 3 bis 5, **dadurch gekennzeichnet, dass** das Halteteil (17) aus einem langgestreckten, plattenartigen Element gebildet ist, dessen mittlerer Längenabschnitt derart kreisbogenartig gewölbt ist, dass er mit der vom Aufnahmeraum (3) der Schelle abgekehrten Seite die Haltefläche (29) für die Anlage des Federbandes und mit der dem Aufnahmeraum (3) zugekehrten Seite die Anlagefläche (27) für das Aufnahmeteil bildet.

7. Schelle nach Anspruch 6, **dadurch gekennzeichnet, dass** das plattenartige Element an beiden Enden des gewölbten, mittleren Längenabschnittes an einer Umlenkstelle (21) derart abgebogen ist, dass jeweils ein Fußteil (23) gebildet wird, und dass im plattenartigen Element im Bereich der Umlenkstellen jeweils ein Durchbruch (19) für den Durchtritt des Haltebandes (1) vorgesehen ist.

8. Schelle nach Anspruch 7, **dadurch gekennzeichnet, dass** die Länge des Federbandes so gewählt ist, dass seine beiden Enden (37) sich durch die Durchbrüche (19) hindurch erstrecken.

9. Schelle nach Anspruch 8, **dadurch gekennzeichnet, dass** die sich durch die Durchbrüche (19) hindurch erstreckenden Enden (37) des Federbandes wellenfrei sind.
